# EUROPEAN PATENT SPECIFICATION

(11) **EP 0 626 915 B1**
(45) Date of publication and mention of the grant of the patent: **19.03.1997**
(21) Application number: 93904510.0
(22) Date of filing: 15.01.1993
(51) Int. Cl.: B62D 1/16, B62D 1/18

(54) **STEERING LOWER SHAFT ASSEMBLY COUPLING**
KUPPLUNGSGLIED FÜR EINE FAHRZEUGLENKSÄULE
DISPOSITIF D'ACCOUPLEMENT D'ENSEMBLE ARBRE DE DIRECTION

(30) Priority: 28.02.1992 US 843321
(43) Date of publication of application: 07.12.1994
(73) Proprietor: THE TORRINGTON COMPANY, Torrington, Connecticut 06790 (US)
(72) Inventor: CHERPICIAN, Berci, Framington, CT 06032 (US)
(74) Representative: Feakins, Graham Allan
(86) International application number: US9300391
(87) International publication number: WO9316907

(56) References cited:
- FR-A- 2 515 129
- US-A- 3 600 969
- US-A- 3 926 069

## Description

This invention relates generally to couplings for steering shafts and more particularly to couplings used in steering shafts with larger degrees of angular misalignment.

US-A-3,926,069 discloses a breakaway universal joint assembly for a steering column which consists of a spider having four arms disposed in a cross-like configuration and a pair of yokes coupled to opposed arms of the spider. FR-A-2,515,129 teaches a coupling for two non-aligned sections of a steering column, each section having a pivot bolt carried in a fork. A central body with two recesses having perpendicular axes connects the two sections using rigid dowels.

Steering shafts are frequently made using two shaft members connected by a rubber coupling. The rubber coupling provides axial and torsional dampening.

As the angular misalignment between the two shaft members increases, the bending stress on the rubber coupling increases. This increases the fatigue on the rubber coupling and reduces its effective lifetime.

US-A-3,926,069 discloses a steering column lower shaft assembly according to the pre-characterising clause of claim 1, with a rigid cross member.

According to the present invention, there is provided a steering lower shaft assembly coupling of the type having a lower shaft member and an upper shaft member, the coupling having an axis of rotation, a cross member and a pair of connecting means for pivotally connecting the upper shaft member and the lower shaft member to the cross member, characterised in that said cross member is a flexible elastomeric cross member.

For a better understanding of the invention and to show how the same may be carried into effect, reference will now be made, by way of example, to the accompanying drawings, in which:-
FIG. 1 is a simplified view of a steering shaft assembly incorporating the present invention;
FIG. 2 is a plan view illustrating the steering lower shaft assembly coupling shown in FIG. 1;
FIG. 3 is a side view of the steering lower shaft assembly coupling shown in FIG. 2;
FIG. 4 is a plan view illustrating a second embodiment of a steering shaft lower assembly coupling of the present invention; and
FIG. 5 is a side view of the steering lower shaft assembly coupling shown in FIG. 4.

### DETAILED DESCRIPTION

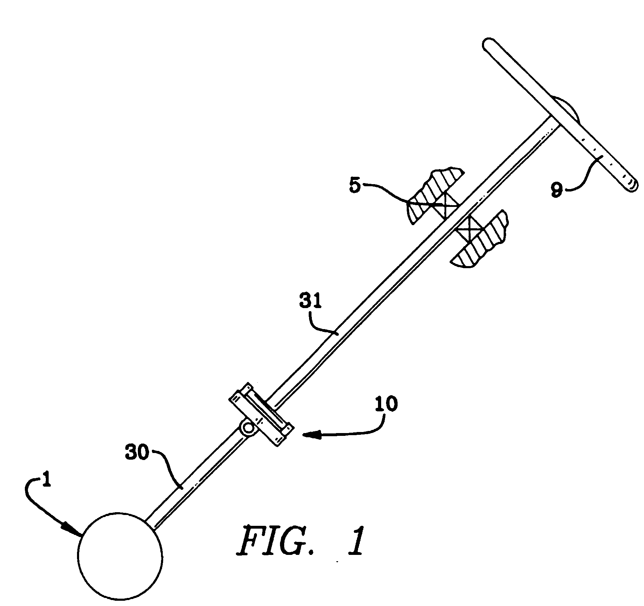

FIG. 1 shows a steering column comprising an upper shaft 31 and a lower shaft 30. The lower shaft 30 is connected to a steering box 1. A steering wheel 9 is connected to the upper shaft 31. The upper shaft 31 is supported by one or more bearings 5. The upper shaft 31 of the steering column is connected to the lower shaft 30 of the steering column by a steering lower shaft assembly coupling 10. FIG. 1 shows a first embodiment of the steering lower shaft assembly coupling 10 of the present invention.

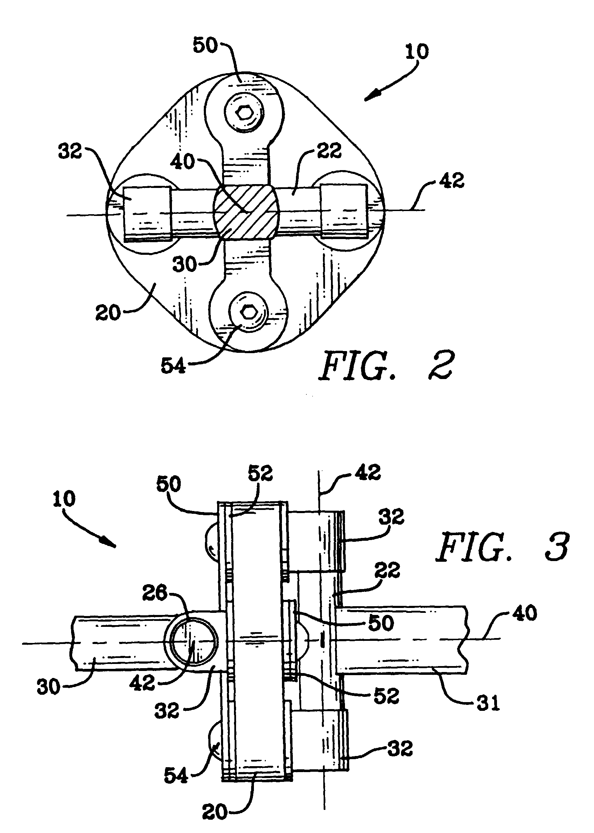

FIGS. 2 and 3 show the details of the first embodiment of the steering lower shaft assembly coupling 10. The steering lower shaft assembly coupling consists of a lower and upper shaft members 30 and 31 pivotally connected to an elastomeric member 20. The upper shaft member 31 is the driving member and the lower shaft member 30 is the driven member. The steering lower shaft assembly coupling 10 rotates about an axis of rotation 40.

The elastomeric member 20 provides axial and torsional dampening between the shaft members 30 and 31. The elastomeric member 20 also accommodates some angular misalignment between the shaft members 30 and 31.

A pair of supports 32 connect each shaft member 30, 31 to the elastomeric member 20. Each support 32 is attached to the elastomeric member 20 using screws 54. The screws 54 pass through a dog-bone shaped backing plate 50. Two backing plates 50 are used, one for each member 30, 31. The backing plates 50 prevent the screws 54 from wearing through the elastomeric member 20. The elastomeric member 20 has raised bosses 52 under each backing plate 50 where the screws 54 attach the backing plate 50 to the elastomeric member 20. This raises the backing plates 50 away from the elastomeric member 20 and allows some flexing to occur.

Each shaft member 30, 31 terminates in a yoke 22. The ends of each yoke 22 are pivotally connected to the elastomeric member 20 by supports 32. As shown in FIG. 3, a bearing 26 is interposed between the yoke end and the support 32. Not all applications of the steering lower shaft assembly coupling 10 require a bearing 26 in the pivotal connection.

Each yoke 22 rotates about an axis of pivot 42. Each axis of pivot 42 is at a 90 degree angle to the axis of rotation 40. Each axis of pivot 42 lies in a plane. The two planes for the axes of pivots 42 shown in FIGS. 2 and 3 are parallel to each other.

The steering lower shaft assembly coupling 10 is a mechanism for the transfer of steering shaft torsional movement through an angle with vibrational damping in the axial and torsional directions of the connecting shaft members. The steering lower shaft assembly coupling 10 is different than a classical universal joint mainly because of the torsional stiffness of the elastomeric member 20 which replaces the rigid cross component. Without the pivotal connections, the elastomeric member 20 would undergo large deformations when under torque, thereby changing the 90 degree relative angle between the two yokes and therefor changing the distribution of the load components.

For applications with smaller allowed angular mismatches and with longer connecting shafts, the steering lower shaft assembly coupling 10 described above is suitable. For applications where the misalignment angle is higher and the shaft members are short, the rotational center of the steering lower shaft assembly coupling 10 can shift causing an unacceptable increase in run-out. For these applications, the preferred embodiment, described below, is used.

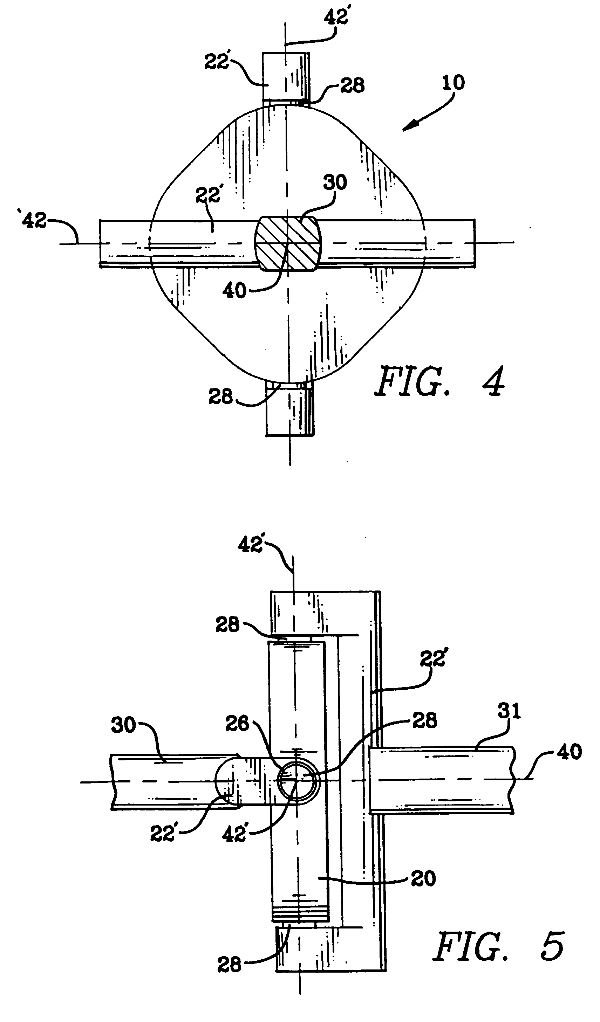

A preferred embodiment of the steering lower shaft assembly coupling 10 is shown is FIGS. 4 and 5. In the preferred embodiment, two pair of pins 28 are connected to outer edge of the elastomeric member 20. Each pin 28 extends outward from the elastomeric member 20 at a 90 degree angle to the adjacent pins 28. Each pin is also at a 90 degree angle to the axis of rotation 40. Each shaft 30, 31 terminates in a yoke 22'. The ends of each yoke 22' are pivotally connected to pins 28. As shown in FIG. 4, a bearing 26 is interposed between the yoke end and the pin 28. Not all applications of the steering lower shaft assembly coupling 10 require a bearing 26 in the pivotal connection.

Each yoke 22' rotates about an axis of pivot 42'. Each axis of pivot 42' is at a 90 degree angle to the axis of rotation 40. The two axes of pivots 42' lie in the same plane.

When the two yokes 22' are pivotally connected to the elastomeric member 20 in the same plane, the center of rotation of the steering lower shaft assembly coupling 10 remains in the same point as the angular offset between the shaft members 30, 31 increases. This reduces run-out of the steering shaft.

## Claims

1. A steering lower shaft assembly coupling of the type having a lower shaft member (30) and an upper shaft member (31), the coupling having an axis of rotation, a cross member and a pair of connecting means (32) for pivotally connecting the upper shaft member (31) and the lower shaft member (30) to the cross member, characterised in that said cross member is a flexible elastomeric cross member (20).

2. A shaft assembly coupling according to claim 1 and further comprising two pairs of pins (28) connected to the flexible cross member (20), each connecting means (32) comprising a yoke (22) which is pivotally connected to one of the pair of pins, each yoke (22) pivoting about an axis, the axes of pivot (42) of the yokes (22) being in a common plane and the axes of pivot of the yokes being perpendicular to one another.

3. A shaft assembly coupling according to claim 2, wherein the axes of pivot of the yokes (22) and the axis of rotation of the coupling intersect at a point.

4. A shaft assembly coupling according to claim 1, 2 or 3 and further comprising a bearing assembly (26) located in each pivotal connection of the flexible cross member.

5. A shaft assembly coupling according to any one of the preceding claims, wherein the axis of pivot of the upper shaft connecting means (32) is 90 degrees to the axis of rotation of the coupling and the axis of pivot of the upper shaft connecting means is located in a first plane; and the axis of pivot of the lower shaft connecting means (32) is 90 degrees to the axis of rotation of the coupling and the axis of pivot of the lower shaft connecting means is located in a second plane, said first plane being parallel to said second plane.

6. A shaft assembly according to claim 1 and further comprising two pairs of pins connected to the flexible cross member (20), each pin extending outward at a 90 degree angle to the adjacent pins, each connecting means comprising a yoke (22') which is pivotally about an axis, the axes of the pivot of the yokes being in a common plane and the axes of pivot of the yokes being perpendicular to one another.

7. A shaft assembly according to claim 6, wherein the axes of pivot of the yokes (22') are at 90 degrees to the axis of rotation of the coupling.

## Patentansprüche

1. Kupplungsanordnung für eine Fahrzeuglenksäule der Art, die ein unteres Säulenglied (30) und ein oberes Säulenglied (31) hat, wobei die Kupplung eine Drehachse, ein Querglied und ein Paar von Verbindungsmitteln (32) hat, um das obere Säulenglied (31) und das untere Säulenglied (30) mit dem Querglied schwenkbar zu verbinden, **dadurch gekennzeichnet,** daß das Querglied ein flexibles, elastomeres Querglied (20) ist.

2. Säulenanordnung nach Anspruch 1, die ferner zwei Paare von Stiften (28) aufweist, die mit dem flexiblen Querglied (20) verbunden sind, wobei jedes Verbindungsmittel (32) ein Joch (22) aufweist, das schwenkbar mit einem Stift des Stiftpaares verbunden ist, wobei jedes Joch (22) um eine Achse schwenkbar ist, wobei die Schwenkachsen (42) der Joche (22) in einer gemeinsamen Ebene liegen und die Schwenkachsen der Joche senkrecht zueinander sind.

3. Säulenanordnung nach Anspruch 2, bei der die Schwenkachsen der Joche (22) und die Drehachse der Kupplung sich an einem Punkt schneiden.

4. Säulenanordnung nach Anspruch 1, 2 oder 3, die ferner eine Lageranordnung (26) aufweist, die in jeder Schwenkverbindung des flexiblen Querglieds angeordnet ist.

5. Säulenanordnung nach einem der vorhergehenden Ansprüche, bei der die Schwenkachse des oberen Säulenverbindungsmittels (32) um 90° gegenüber der Drehachse der Kupplung versetzt ist und die Schwenkachse des oberen Säulenverbindungsmittels in einer ersten Ebene angeordnet ist; und bei der die Schwenkachse des unteren Säulenverbindungsmittels (32) um 90° gegenüber der Drehachse der Kupplung versetzt ist und die Schwenkachse des unteren Säulenverbindungsmittels in einer zweiten Ebene angeordnet ist, wobei die erste Ebene parallel zu der zweiten Ebene ist.

6. Säulenanordnung nach Anspruch 1, die ferner zwei Paare von Stiften aufweist, die mit dem flexiblen Querglied (20) verbunden sind, wobei sich jeder Stift nach außen unter einem Winkel von 90° zu den benachbarten Stiften erstreckt, wobei jedes Verbindungsmittel ein Joch (22') aufweist, das um eine Achse schwenkbar ist, wobei die Schwenkachsen der Joche in einer gemeinsamen Ebene liegen und die Schwenkachsen der Joche senkrecht zueinander sind.

7. Säulenanordnung nach Anspruch 6, bei der die Schwenkachsen der Joche (22') unter 90° zu der Drehachse der Kupplung liegen.

## Revendications

1. Accouplement d'ensemble d'arbre inférieur de direction du type comprenant un organe inférieur d'arbre (30) et un organe supérieur d'arbre (31), l'accouplement ayant un axe de rotation, un organe transversal et deux dispositifs (32) de connexion destinés à raccorder l'organe supérieur d'arbre (31) et l'organe inférieur d'arbre (30) à l'organe transversal afin qu'ils puissent pivoter, caractérisé en ce que l'organe transversal est un organe transversal élastomère flexible (20).

2. Accouplement d'ensemble d'arbre selon la revendication 1, comprenant en outre deux paires de broches (28) raccordées à l'organe transversal flexible (20), chaque dispositif de connexion (32) comprenant un étrier (22) qui est connecté de manière pivotante à l'une des deux broches, chaque étrier (22) pivotant autour d'un axe, les axes de pivotement (42) des étriers (22) étant dans un plan commun et les axes de pivotement des étriers étant perpendiculaires l'un à l'autre.

3. Accouplement d'ensemble d'arbre selon la revendication 2, dans lequel les axes de pivotement des étriers (22) et l'axe de rotation de l'accouplement se recoupent en un point.

4. Accouplement d'ensemble d'arbre selon la revendication 1, 2 ou 3, comprenant en outre un ensemble (26) formant palier placé à chaque connexion pivotante de l'organe transversal flexible.

5. Accouplement d'ensemble d'arbre selon l'une quelconque des revendications précédentes, dans lequel l'axe de pivotement du dispositif (32) de connexion de l'arbre supérieur fait un angle de 90° avec l'axe de rotation de l'accouplement, et l'axe de pivotement du dispositif de connexion de l'arbre supérieur est placé dans un premier plan, et l'axe de pivotement du dispositif (32) de connexion de l'arbre inférieur fait un angle de 90° avec l'axe de rotation de l'accouplement, et l'axe de pivotement du dispositif de connexion de l'arbre inférieur est placé dans un second plan, le premier plan étant parallèle au second plan.

6. Ensemble d'arbre selon la revendication 1, comprenant en outre deux paires de broches raccordées à l'organe transversal flexible (20), chaque broche étant disposée vers l'extérieur suivant un angle de 90° par rapport aux broches adjacentes, chaque dispositif de connexion comprenant un étrier (22') qui peut pivoter autour d'un axe, les axes de pivotement des étriers se trouvant dans un plan commun et les axes de pivotement des étriers étant perpendiculaires l'un à l'autre.

7. Ensemble d'arbre selon la revendication 6, dans lequel les axes de pivotement des étriers (22') forment un angle de 90° avec l'axe de rotation de l'accouplement.
